# EUROPEAN PATENT APPLICATION

(11) **EP 1 065 120 A2**
(43) Date of publication of application: **03.01.2001**
(21) Application number: 99830594.0
(22) Date of filing: 22.09.1999
(51) Int. Cl.: B61C 9/00, F16C 3/03, B60K 17/22

(54) **Telescopic cardanic shaft for railway vehicles**

(30) Priority: 01.07.1999 IT TO990565
(71) Applicant: FIAT FERROVIARIA S.p.A., 10125 Torino (IT)
(72) Inventor: Alessio, Bruno, 12038 Savigliano (Cuneo) (IT); Longo, Cristiano, 12038 Savigliano (Cuneo) (IT)
(74) Representative: Marchitelli, Mauro

(57) **Abstract**

Telescopic cardanic shaft (1) for the transmission of torque in a railway vehicle, including a first axial portion (2) and a second axial portion (3) torsionally coupled to each other in an axially slidable manner. The second axial portion (3) has a zone with reduced section (9) which defines a torsional joint with predetermined breaking point. A rotational support (10) is placed between parts of the second axial portion (3) placed on the opposite sides of the reduced section zone (9).

## Description

The present invention relates in general to cardanic transmission shaft and relates more particularly to a telescopic cardanic shaft for transmitting torque between the motor and a driving axle of a railway vehicle.

Such cardanic shafts traditionally comprise a first axial portion and a second axial portion torsionally coupled to each other so as to be axially slidable at one end, and provided at the other end with respective cardan joints.

In the use of such cardanic shafts, the possibility of a break under torsional load of one of the two axial portions can occur, for instance in case of seizure of the vehicle motor, which stops the rotation of the first axial portion of the shaft whereas the second axial portion is maintained in rotation possibly even at high speed. The breakage can produce the separation of shaft parts with high kinetic energy, with obvious serious consequences which can derive therefrom.

In order to overcome this problem, it has been proposed to incorporate in one of the two cardan joints, normally the one which joins the telescopic shaft to the vehicle motor, a safety joint containing oil at high pressure. However effective, this joint is relatively heavy, which may entail unbalancing of the mass of the shaft in its entirety, and is also very expensive. In addition, equipping with this kind of joints telescopic cardanic shafts which already exist and are in operation would involve seriour difficulties and further costs.

The object of the present invention is to overcome the problem defined above in a considerably simpler and cheaper way.

In accordance with the present invention, this object is achieved by virtue of the fact that, in a telescopic cardanic shaft of the type defined above, one of said first and second axial portion has a zone with a reduced cross-section, defining a torsional joints with a predetermined breaking point.

In accordance with a preferred embodiment of the invention, the telescopic cardanic shaft includes also means for supporting in rotation parts of said axial portion of the shaft placed on opposite sides of said zone with reduced cross-section.

Normally, the first axial portion of the shaft, placed on the motor side, is hollow and coupled by means of a splined coupling to said second axial portion of the shaft, which is placed on the side of the driving axle. With this arrangement a preferred embodiment of the invention provides that the second portion of the shaft is also hollow and said zone with reduced cross-section is formed in the wall of said second section of the shaft, and said support means include a pin coaxially placed into said second portion of the shaft and fixed for rotation with the respective cardan joint.

Either plain bearing or rolling bearing are placed between the support pin and the wail of the second portion of the shaft.

Therefore, the invention provides a telescopic cardanic shaft having a constructionally simple and economic safety structure which in case of seizure of one of the respective cardan joints enables the other cardan joints to be torsionally disengaged in an effective and reliable way, without risks of uncontrolled splitting of the shaft.

The invention will now be disclosed in detail with reference to the attached drawings, provided purely by way of non-limiting example, in which:
- figure 1 is a schematic elevation and partially sectioned view of a telescopic cardanic shaft in accordance with a first embodiment of the invention,
- figure 2 shows in a greater scale the detail indicated by the square in figure 1, and
- figures 3, 4 and 5 are three views similar to figure 1, partial and in a greater scale, which show respectively a first, a second and a third variant of a telescopic cardanic shaft according to the invention.

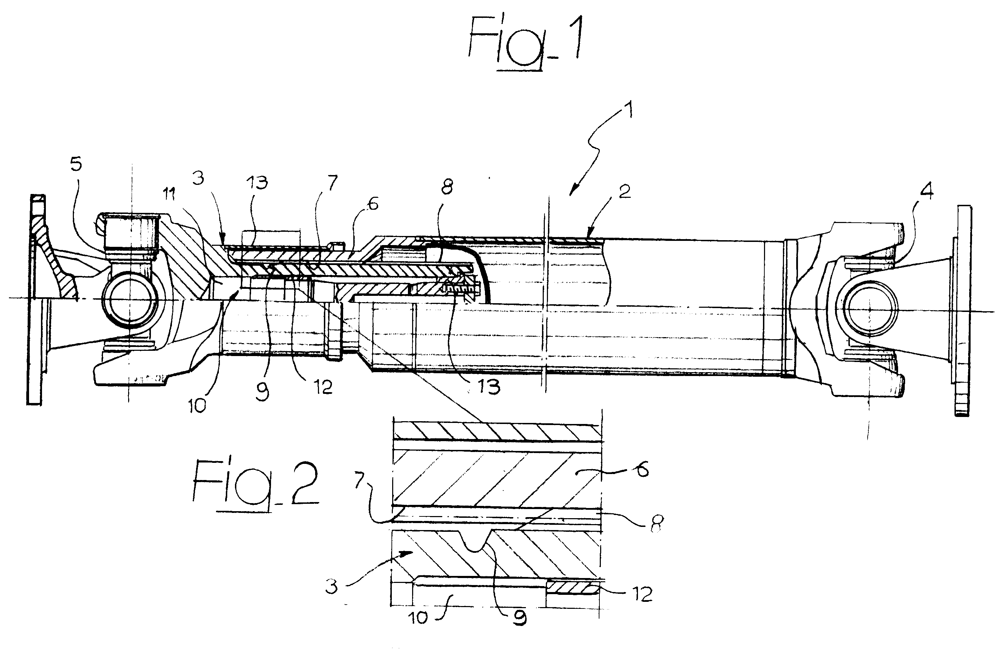

Referring initially to figures 1 and 2, the numeral reference 1 indicates a telescopic cardanic shaft for the transmission of torque between the motor and a driving axle (not shown) of a railway vehicle.

The shaft 1 comprises, in a way generally per se known, a first axial portion 2 with a hollow shape, having greater axial length and cross-section, and a second axial portion 3 having lower length and cross-section than the first section 2, and aligned with the first portion.

The first axial portion 2 of the shaft 1 is provided at one end with a cardan joint generally indicated at 4, intended to be connected in a way per se known with an output member of the driving motor of the railway vehicle.

In a similar way, the second portion 3 of the shaft 1 is provided at one end with a cardan joint indicated generally at 5, intended to be connected by means of a reduction gear, also in a way per se known to the driving axle of a bogie of the railway vehicle.

The end of the first axial portion 2 opposite to the cardan joint 4 is formed with an axial sleeve with a reduced diameter 6 having an internal hole spline 7 engaged with a corresponding spline shaft 8 of the second axial portion 3 of the shaft 1. The splines 7 and 8 form an axially slidable torsional coupling between the axial portions 2 and 3, permitting a variation of the total length of the shaft 1.

In accordance with the main characteristic of the invention, one of the axial portions 2, 3 of the shaft 1 has a zone with a reduced cross-section which defines a torsional joint with a predetermined breaking point, adapted, in case one of the cardan joints 4, 5 seizes accidentally, to free the rotation of the other cardan joint 5, 4, respectively. Such possibility can occur, for instance, in case of seizure of the driving motor of the railway vehicle with consequent locking of the cardan joint 4 together with the first portion 2 of the shaft 1.

Said torsional joint with predetermined breaking point can actually be provided indifferently either on the first portion 2 or on the second portion 4 of the shaft 1: it is however convenient, for evident reasons of engineering, to provide the torsional joint with predetermined breaking point in the part with lower peripheral speed of the cardan shaft 1, that is -in case of the preferred embodiment disclosed with reference to figures 1 and 2- in correspondence with the second axial section 3. For this purpose, the second axial portion 3 is also hollow and, as shown in detail in figure 2, has an outer circumferential groove 9 at a certain distance from the cardan joint 5 on one side and from the spline 7 on the other side, the effect of which is a locally reduced wall thickness.

The invention also provides for the presence of a rotational support associated with the second axial portion 3 of the shaft 1 for its support in case of breakage of the reduced section zone 9. In case of the embodiment of figures 1 and 2, such rotational support is conveniently placed inside the second axial portion 3, and comprises a pin 10 coaxially placed inside the second portion 3 of the shaft 1 and having an end 11 rotationally coupled thereto, for instance by driving, in correspondence with the cardan joint 5. Bearings 12, 13 are placed between the pin 10 and the wall of the second portion 3 of the shaft 1 placed beyond the zone with reduced section 9. Such bearings can be either rolling bearing or plain bearings (bearing brass).

It is clear that, in case of breakage of the reduced section zone 9, the part of the second portion 3 placed on one side of such zone 9, that is the one corresponding to the cardan joint 5, is free to rotate with respect to the first portion 2 of the shaft 1 and therefore with respect to the cardan joint 4. Such part, fixed for rotation to the pin 11, is rotatably supported by the bearings 12 and 13 on the part opposite to the first portion 3, that is the one placed on the other side of the reduced cross-section zone 9, in its turn fixed for rotation to the first portion 2 of the shaft 1 by means of the splined couplings 7-8.

In accordance with the present invention several alternative solutions are possible in connection both with the disposition of the torsional joint with predetermined breaking point 9, and to the system for rotatably supporting the portion of the cardanic shaft 1 separated from the remaining part after the breakage of the joint 9.

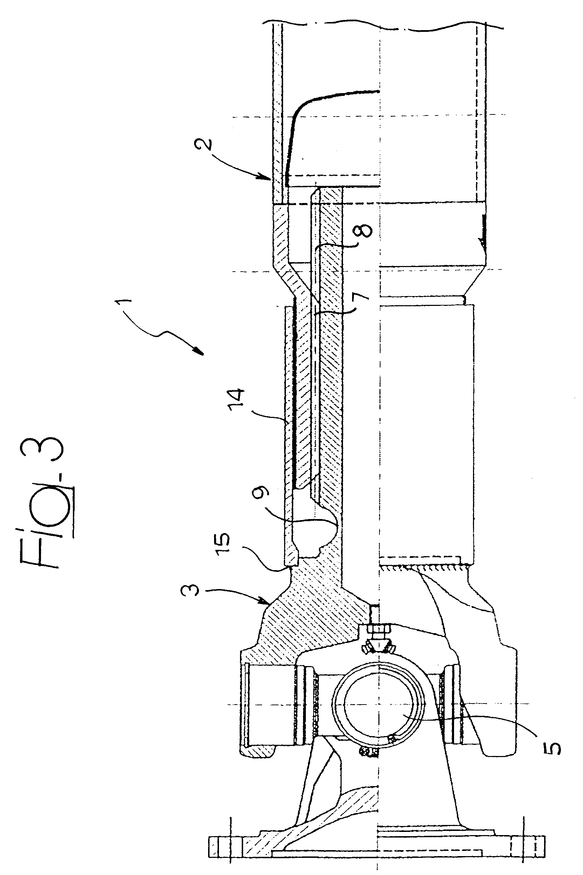

Figures 3, 4 and 5, in which parts identical or similar to the ones already disclosed are indicated by the same numeral references, show three possible variants.

In case of figure 3, the position of the breakable joint, formed by the reduced section zone 9, is similar to the solution of figures 1 and 2, whereas the arrangement of the rotational support is different. In fact, in this case such support is formed by an outer tubular body 14 rigidly fixed at 15 outside the second portion 3 of the shaft 1, in correspondence with the cardanic joint 5 and rotatably coupled, beyond the reduced section zone 9, on the first portion 2 of the shaft 1.

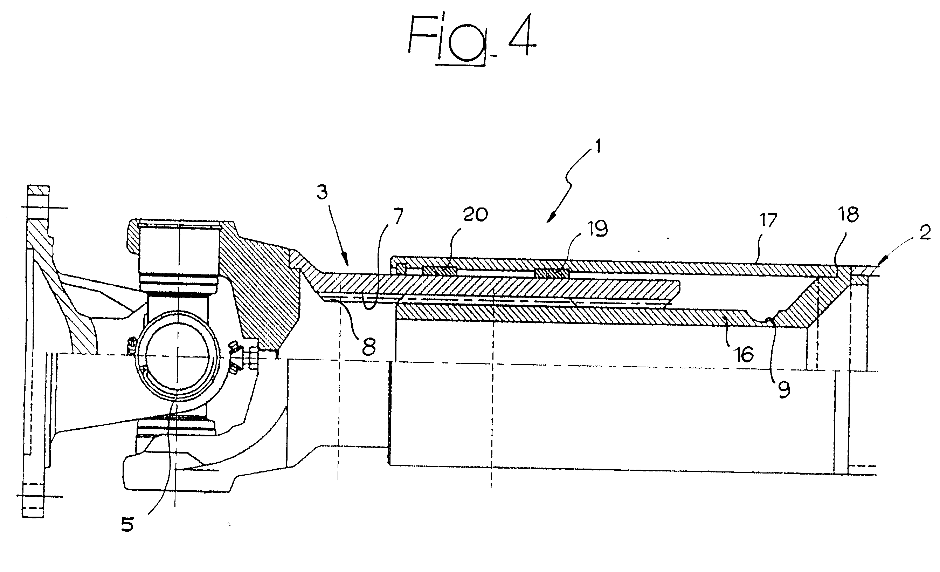

In case of figure 4, the reduced section zone 9 is formed in a part with reduced diameter 16 of the first portion 2 of the shaft 1, which extends into the second portion 3. In such case, the outer spline 8 is obviously formed on the part with reduced diameter 16 of the first portion 2 of the shaft 1, whereas the internal spline 7 is formed in the second portion 3.

Also in this case, the rotational support is formed by an outer tubular body 17 rigidly fixed at 18 to the first portion 2 of the shaft 1, outside of the part with reduced diameter 16, and rotatably coupled beyond the zone with reduced section 9, on the second portion 3 of the shaft 1 be means of bearings 19, 20. Also these bearings can either be rolling bearing or plain bearings (bearing brass).

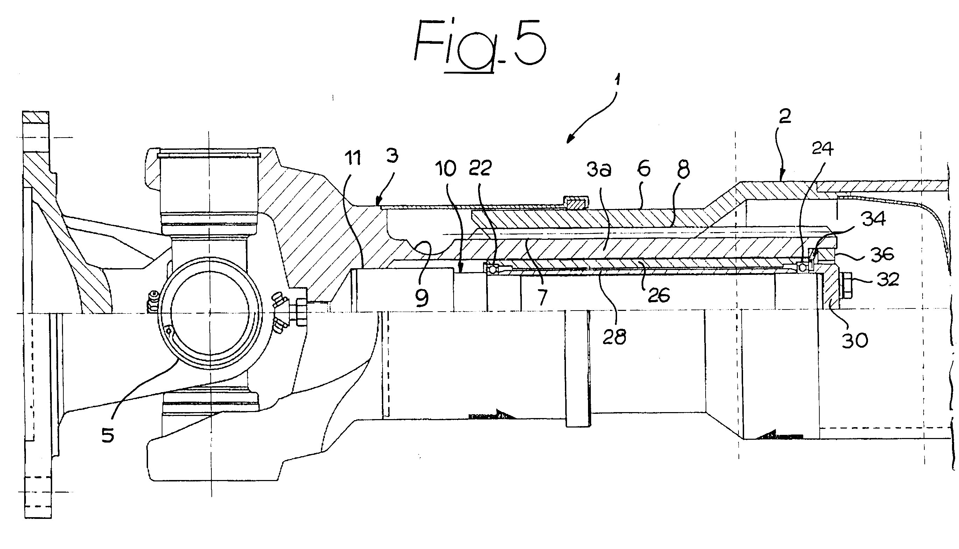

In case of figure 5, the zone with reduced section 9 is formed on the second axial portion 3, as in the variant of figures 1 and 3.

The rotational support associated with the second axial portion 3 comprises a pin 10 coaxially placed into the second axial portion 3 and having an end 11 coupled for rotation thereto, for instance by driving.

Two ball bearings 22, 24 are mounted on the pin 10 and their outer rings are mounted at the end of a sleeve 26 inserted into the second axial portion 3.

The inner rings of the bearings 22, 24 are held in position by a tubular spacer 28 and by a fixing element 30 connected to the pin 10 by means of screws 32. A compression elastic element 34 formed for instance by a Belleville washer is placed between the sleeve 26 and a ring nut 36 fixed at the end of the second axial portion 3. The elastic element 34 moves away in an axial direction the tubular portion 3a from the remaining part 3 of the axial portion 3 in case of breakage of the reduced section zone 3a.

## Claims

1. Telescopic cardanic shaft (1) for the transmission of torque between the motor and a driving axle of a railway vehicle, said shaft (1) including a first axial portion (2) and a second axial portion (3) torsionally coupled to each other and axially slidable with respect to each other at one end and provided at the other end with respective cardan joints (4, 5), characterized in that one of said first and second axial portion (2, 3) has a reduced section zone (9) defining a torsional joint with predetermined breaking point.

2. Shaft according to claim 1, characterized in that it includes also means for rotational support (10; 14; 17; 22, 24) between parts of said axial portion (2, 3) of the shaft (1) placed opposite sides of said reduced section zone (9).

3. Shaft according to claim 1, characterized in that it comprises an elastic compression element (34) arranged so as to move apart from each other parts of said axial portion (2, 3) placed on opposite parts of said reduced section zone (9) in case of breakage thereof.

4. Shaft according to claim 2, characterized in that said first axial portion (2) of the shaft (1), placed on the side of the motor, is hollow and is coupled by means of a splined joint (7, 8) on said second axial portion (3) of the shaft (1), placed on the side of the driving axle, and in that said second portion (3) of the shaft (1) is also hollow and said reduced section zone (9)is formed in the wall of said second portion (3), and said support means include a pin (10) coaxially mounted into said second portion (3) of the shaft (1) and fixed for rotation with the respective cardan joint.

5. Shaft according to claim 4, characterized in that bearing means (12, 13; 22, 24) are placed between said support pin (10) and said wall of the second portion (3) of the shaft.

6. Shaft according to claim 5, characterized in that said bearing means (12, 13) are plain bearings.

7. Shaft according to claim 5, characterized in that said bearing means (22, 24) are rolling bearings.

8. Shaft according to any of claims 4 to 7, characterized in that said zone with reduced section is formed by an outer circumferential grove (9) in the wall of said second portion (3) of the shaft (1).

9. Shaft according to claim 2, characterized in that said first axial portion (2) of the shaft (1), placed on the side of the motor, is hollow and is coupled by means of a splined coupling (7, 8) on said second axial portion (3) of the shaft (1) placed on the side of the driving axle, and in that said second portion (3) of the shaft (1) is also hollow and said reduced section zone (9) is formed in the wall of said second portion (3), and said support means include an outer tubular body (14) fixed for rotation to said second portion (3) and rotatably mounted on said first portion (2).

10. Shaft according to claim 2, characterized in that said second portion (3) of the shaft (1) is hollow and said first axial portion (2) of the shaft (1) placed on the side of the motor, is coupled by means of a splined coupling (7, 8) into said second axial portion (3) of the shaft (1) placed on the side of the driving axle, and in that said reduced section zone (9) is formed in the wall (16) of said first portion (2), and said support means include an outer tubular body (17) fixed in rotation to said first portion (2) and rotatably mounted on said second portion (3).

11. Shaft according to claim 9, characterized in that bearing means are placed between said outer tubular body (17) and said first portion (2) of the shaft (1).
